# EUROPEAN PATENT SPECIFICATION

(11) **EP 4 511 649 B1**
(45) Date of publication and mention of the grant of the patent: **11.03.2026**
(21) Application number: 23724410.8
(22) Date of filing: 08.05.2023
(51) Int. Cl.: G01N 31/22, G01N 21/78

(54) **METHOD AND KIT FOR THE DETECTION OF CHROMIUM-6 IN A SAMPLE**
VERFAHREN UND KIT ZUM NACHWEIS VON CHROM-6 IN EINER PROBE
MÉTHODE ET NECESSAIRE DE DÉTECTION DU CHROME-6 DANS UN ÉCHANTILLON

(30) Priority: 07.05.2022 LU 502047
(43) Date of publication of application: 26.02.2025
(73) Proprietor: SEEF B.V., 4851SJ Ulvenhout (NL)
(72) Inventor: VAN GURP, Lennard, 5171DJ Kaatsheuvel (NL)
(74) Representative: Wittop Koning, Tom Hugo
(86) International application number: PCT/NL2023/050247
(87) International publication number: WO 2023/219493

(56) References cited:
- US-A- 5 550 061
- UNCETA N ET AL: "Chromium speciation in solid matrices and regulation: a review", ANALYTICAL AND BIOANALYTICAL CHEMISTRY, SPRINGER, BERLIN, DE, vol. 397, no. 3, 23 January 2010 (2010-01-23), pages 1097 - 1111, XP019839119, ISSN: 1618-2650
- SVEHLA G: "REACTION OF CHROMIUM(III) IONS", VOGEL'S TEXTBOOK OF MACRO AND SEMIMICRO QUALITATIVE INORGANICANALYSIS, XX, XX, 1 January 1979 (1979-01-01), pages 255 - 259, XP002028814
- SÉBY F ET AL: "Critical assessment of hexavalent chromium species from different solid environmental, industrial and food matrices", TRAC TRENDS IN ANALYTICAL CHEMISTRY, vol. 104, 29 December 2017 (2017-12-29), pages 54 - 68, XP085410105, ISSN: 0165-9936, DOI: 10.1016/J.TRAC.2017.11.019

## Description

The invention relates to a method for determination of the presence chromium-6 (Cr-6) in a solid sample, comprising the steps of (1) contacting the solid sample with a destruction liquid under conditions wherein Cr-6 from the solid sample dissolves in the destruction liquid as a chromate, providing a test solution; (2) subjecting the said test solution to a specific Cr-6 detection reaction, under conditions wherein the presence of Cr-6 is detected; and (3) detecting whether the Cr-6 specific reaction occurred.

The method of the invention is defined in claim 1.

For over 70 years, hexavalent chromium, herein also chromium-6, has been widely used as anti-corrosive agent in paints and primers, especially as a spray paint on metal surfaces, ships and aircraft, defence equipment, infrastructure objects, factories, containers, and many types of metal structures, such as steel window frames. However, chromium-6 is toxic, and the use thereof has now been abandoned.

However, many painted surfaces may or may not contain chromium-6. In order to check whether a painted surface contains chromium or not, several tests have developed, in particular based on method 7600 of the NIOSH Manual of Analytical Methods (NMAM) of August 15, 1994. According to these state of the art methods, the Cr-6 dissolves in the destruction liquid, whereas Cr-3 remains undissolved.

According to the state of the art methods, the solid sample is obtained, e.g., by scratching off some pieces of paint from a painted metal surface an treating these in a destruction liquid to specifically bring the hexavalent chromium in solution as a chromate. This can be done in a strong acid destruction medium, wherein the chromate is predominantly present as the dichromate ion Cr₂O₇²⁻, or in a strong basic destruction medium, wherein the chromate is predominantly present as the monochromate ion CrO₄²⁻.

Subsequently, the chromate solution is subjected to a specific Cr-6 detection reaction wherein a colouring reaction with a chromogenic agent, in particular 1,5-diphenylcarbazide (DPC) is performed in acid conditions.

The problem of the methods, known in the art is that during destruction of the sample, the hexavalent Cr-6 will oxidise any metallic contaminations in the sample, such as aluminium or zinc, resulting in the formation of trivalent chromium, Cr-3, and the aluminium or zinc oxide, or both.

The trivalent chromium is not capable of reacting with the chromogenic agent and as a result, the test results are unreliable since not all Cr-6 will be detected, or even not detected at all, although is was present in the paint sample.

Since the dichromate is an even stronger oxidator than the monochromate, the destruction liquid for such solid paint samples is usually a basic destruction liquid, but still, the risk for false negative test results (i.e. wherein falsely no Cr-6 or a lower content thereof is detected) is significant.

This problem has also been described by Unceta et al. (Anal. Bioanal. Chem (2010), Vol. 397 (3), pp. 1097-111, and by Séby et al (Trac Trends Anal. Chem (2017), Vol 104(29), pp. 54-68, however, without providing a satisfactory solution therefor.

US5,550,061 describes a sampling device suitable for measuring chromium with different compartments for a destruction liquid and a colouring liquid, wherein Cr-6 can be coloured with DPC. However, US5,550,061 does not distinguish between initially present Cr-3 and Cr-3 formed during the measurement. In contrast, US5,550,061 suggests to convert Cr-3 into Cr-6 with a strong oxidiser if Cr-3 is to be included in the measurement. However, the problem of avoiding false positives as a result of undesired conversion of Cr-3 to Cr-6 is not described, nor suggested in this document.

In contrast, the present invention provides a way to prevent Cr-3 from forming from Cr-6 by including, in the reaction mixture, a strong oxidiser. US5,550,061 does not address the problem of undesired Cr-3 being formed during the measurement.

The present invention now provides a very elegant solution to the above problem and is thereto characterized in that the destruction liquid comprises an oxidator, having a higher standard electrode potential *E⁰* than the chromate. The chromate here is the chromate that is dissolved in the destruction liquid. Since both mono - and dichromates are in equilibrium with one another, both chromates will usually be present in the destruction liquid. Under highly acidic and concentrated conditions, higher chromates such as trichromate (Cr₃O₁₀²⁻), tetrachromate (Cr₄O₁₃²⁻) and polychromates may also be formed.

A stronger oxidator will immediately react with any availably electron, since it is a stronger oxidator than the chromate. Even if the chromate would tend to be reduced to Cr-3, i.e., in a soluble hydroxide, the strong oxidator will immediately oxidise the said Cr-3 back to Cr-6, so that any possibly false negatives (the Cr-3 originating from Cr-6) are returned into the proper and accurate true positive.

Under the reaction conditions wherein the sample is contacted with the destruction liquid, Cr₂O₃ does not dissolve. Any Cr-3 that may have been originally present in the sample will not be oxidised to Cr-6, since the Cr-3 in a paint sample would be present as Cr₂O₃. The reaction surface of Cr₂O₃ is limited and Cr₂O₃ does not dissolve sufficiently well to be vulnerable to oxidation to CrO₄²⁻, even in the presence of a strong oxidator as defined herein (an oxidator, having a higher standard electrode potential *E⁰* than the chromate), so that false positive results are neglectable. The method of the invention is therefore particularly suitable for samples comprising zinc and/or aluminium.

For a proper destruction of the solid Cr-6, the destruction liquid is preferably chosen from an acid destruction liquid having a pH of 1 - 5, preferably 1 - 4, even more preferably 1 - 3 and most preferably 1 - 2, and a basic destruction liquid having a pH of 9 - 14, preferably 10 - 14, more preferably 11 - 14, most preferably 12 - 14. Since the destruction liquid comprises a strong oxidator, stronger than the chromate originating from the sample, it is now very well possible to use an acid destruction liquid.

To this end, the acid destruction liquid preferably comprises H₂SO₄,HNO₃ or HCl, whereas the alkaline destruction liquid preferably comprises NaOH or KOH and Na₂CO₃.

Nevertheless, the use of a basic destruction liquid is slightly preferred since the *E⁰* of the monochromate predominant at basic pH, is slightly lower than the *E⁰* of the dichromate, predominant at acidic pH.

Therefore, in an attractive embodiment, the destruction liquid is a basic destruction liquid comprising 0.05 - 5 M, preferably 0.1 - 1 M, more preferably 0.4 - 0.6 M of the base, preferably NaOH or KOH or a combination thereof, and preferably further comprises 0.03 - 3 M, preferably 0.1 - 1 M, more preferably 0.2 - 0.4 M Na₂CO₃.

In case the destruction liquid comprises carbonate ions, the oxidator may be consumed by the said carbonate, therewith limiting the capacity of the oxidator, and requiring a higher amount of the oxidator in the destruction liquid. In order to avoid such undesired consumption of oxidator, and in addition to the above-described single step test, the invention also provides a multistep test wherein the carbonate is removed from the destruction liquid before the oxidator is added. Thereto, step (1) comprises the steps of:
(1.1) contacting the solid sample with the basic destruction liquid comprising Na₂CO₃, allowing the Cr-6 from the solid sample to dissolve, obtaining a Cr solution;
(1.2) removing the carbonate from the Cr solution of step (1.1), obtaining a carbonate depleted Cr solution;
(1.3) adding the oxidator to the carbonate depleted Cr solution of step (1.2).

By contacting the solid sample with the destruction liquid, the solid Cr-6 will dissolve, whereas solid Cr-3 will remain solid. Once dissolved, the Cr-6 may become reduced to soluble C-3 if one or more reducing compounds such as aluminium or zinc are present in the sample.

In an attractive embodiment, the above step (1.2) comprises a step (1.2.1) of acidifying the Cr solution allowing the carbonate to be converted to gaseous CO₂. The gaseous CO₂ will evaporate from the Cr solution, resulting in a Cr solution that is depleted from carbonate. In case of presence of any reducing compounds, Cr-6 can be converted into soluble Cr-3, i.e., in the form of the Cr-3 hydroxide. As explained above, this is not a problem, since addition of the oxidator in step 1.3 will result in conversion of the dissolved Cr-3 back to Cr-6, without using any Cr₂O₃ as a substrate. Accordingly, optimal dissolution of the Cr-6 can take place by the presence of the carbonate, and optimal oxidation from dissolved Cr-3 to Cr-6 takes place by the oxidator, in particular hydrogen peroxide, without the risk of consumption of the said oxidator by any carbonate, providing a very reliable Cr-6 level in the destruction liquid. Further, a higher concentration of oxidator can be used, without the risk of reaction thereof with any dissolved paint components or carbonate.

**In step (1.2.1),** the acidifying of the Cr solution is preferably to a pH of 1 - 5, preferably to 1 - 4, more preferably to 1 - 3, even more preferably between 1 - 2, most preferably about 1. The skilled person will be aware as how to acidify the destruction liquid, e.g. by adding a suitable acid in a suitable concentration, such as acetic acid or sulphuric acid, in a concentration of e.g. 1 - 3 M, preferably 2 - 3 M, more preferably about 3 M.

Although the oxidator can be added to the acidified destruction liquid, it is preferred, once the carbonate has been removed, to bring the pH back to a basic value of 9 - 14. Thereto, step (1.2) preferably comprises a step (1.2.2) of increasing the pH of the acidified Cr solution of step (1.2.1) to a pH of 9 -14, preferably 10 - 14, more preferably 11 - 14, most preferably 12 - 14. Again, the skilled person will be aware as how to bring the pH to the envisaged basic value by the addition of e.g. a hydroxide such as NaOH or KOH in a proper concentration of e.g. 0.05 - 5 M, preferably 0.1 - 1 M, more preferably 0.2 - 1 M, most preferably 0.4 - 0.6 M.

The detection step (2) is preferably preceded by a filtration step in order to remove any solids, including the Cr₂O₃.The skilled person will be aware of suitable filtration techniques. In case step (1) is performed where the dissolution step (1.1) is separated from the step (1.3) of adding the oxidator, filtration preferably takes place before the addition of the oxidator, in particular between the acidification step (1.2.1) and the step (1.2.2) of increasing the pH.

Attractively, the filtration step comprises filtration through a filter of 0.1 - 1 micron, such as a PFTE filter.

The oxidator is preferably chosen such, that the standard electrode potential *E⁰* thereof is above 1.23 mV, the *E⁰* of the dichromate. The oxidator in the destruction liquid is preferably chosen from the group, consisting of hydrogen peroxide (*E⁰* of 1.78), manganese dioxide (*E⁰* of 1.24), persulfate (*E⁰* of 2.01), hypochlorite (*E⁰* of 1.63), permanganate (*E⁰* of 1.49), chlorine (*E⁰* of 1.36), cerium-4 (*E⁰* of 1.44), ozone (*E⁰* of 2.08) and fluorine (*E⁰* of 2.87).

The destruction liquid preferably comprises 1 mM - 10 M of the oxidator. For the above-described single-step approach, the destruction liquid preferably comprises 1 mM - 1 M, preferably 7 - 160 mm, even more preferably 10 - 100 mM of the oxidator. In the multistep-approach, wherein the Cr-6 has been dissolved in a destruction liquid depleted from carbonate, a high concentration of oxidator is preferred, since there is no risk of reaction with dissolved paint components or carbonate. In particular when the destruction liquid has been subjected to a filtration step, no undesired reaction between the oxidator and any still undissolved paint components can take place. It was found that with such amounts of oxidator, the Cr-6 present in the sample can reliably be detected both qualitatively and quantitatively.

Although the skilled person is aware of alternative detection reaction capable of specifically detecting the presence of dissolved Cr-6 (i.e., in the form of a chromate), the specific Cr-6 detection reaction preferably comprises a chromogenic agent capable of specifically reacting with a chromate resulting in a colour change, the chromogenic agent preferably being chosen from 1,5-diphenylcarbazide and variamine blue B. The specific detection reaction of the NIOSH7600 standard involves a colouring reaction with 1,5-diphenylcarbazide.

In another aspect, the invention relates to a destruction liquid as described above. the destruction liquid preferably comprises, and preferably consists of:
- 0.05 - 5 M, preferably 0.1 - 1 M, more preferably 0.4 - 0.6 M of a base, chosen from NaOH and KOH or a combination thereof,
- 0.03 - 3 M, preferably 0.1 - 1 M, more preferably 0.2 - 0.4 M Na₂CO₃, and, optionally,
- 10 - 100 mM of an oxidator having a standard electrode potential *E⁰* of more than 1.23 mV.

The said oxidator is preferably any of the oxidants as described or preferred above, and in particular comprises hydrogen peroxide. As discussed above, the oxidator can also be added after depletion of the destruction liquid from the carbonate, allowing a higher oxidator content of up to e.g. 10 M.

In another aspect, the invention relates to a kit, comprising a first container comprising the destruction liquid as described above, and a second container comprising a reaction mixture for performing the detection reaction as described above. The kit of the present invention is defined in claim 14.

For performing the above described single step method, the first container preferably comprises the envisaged amount of oxidator.

Also described is a kit to perform the multi-step method, wherein the oxidator is accommodated in a third container, preferably in a concentration of 10 mM - 10 M, more preferably 100 mM - 5 M.

The kit intended for the multi-step detection method may further comprise a fourth container comprising an acidifying agent for acidifying the destruction liquid of the first container to a pH as described above, i.e. to 1 - 5, preferably 1 - 4, more preferably 1 - 3 and most preferably 1 - 2. The acidifying agent, and the concentration thereof may be as described above.

The kit intended for the multi-step detection method may further comprise a fifth container comprising an agent capable of bringing the acidified destruction liquid to a pH of 9 - 14, 10 - 14, 11 - 14, or 12 - 14 as described above. Again, the said agent and the concentration may be as described above.

The kit preferably further comprises an additional container comprising a positive control sample comprising a Cr-6 chromate, preferably dissolved in the sample, in an amount that is detectable by performing the detection reaction using the reaction mixture from the second container. The said chromate is preferably dissolved in the sample. Further, the kit preferably comprises instructions for use, wherein the reaction conditions for the destruction and the detection reaction are given.

The invention will now be further explained by the following examples.

### Examples

### Materials:

| | |
|---|---|
| H₂O₂ | : 27 w/w% aqueous solution stabilised solution, Thermo Scientific, US |
| KMnO₄ | : potassium permanganate 99.0-100.5%, ACS, for analysis, Merck, US |
| NaOH | : sodium hydroxide pellets pure, Merck |
| Na₂CO₃ | : sodium carbonate ≥98%, purified, VWR Chemicals, US |
| H₂SO₄ | : sulfuric acid ≥95%, technical, VWR Chemicals |
| Zinc | : zinc 97,5%, powder 4 - 7 µm, Thermo Scientific |
| Aluminium | : aluminium, powder for synthesis, Merck |
| Cr-6 pigment | : potassium chromate K₂CrO₄. 99.5% for analysis, Thermo Scientific |
| Cr-3 pigment | : chromium(III) oxide, Technipur^{®}, Merck |
| Detection reagent | : 1,5-Diphenylcarbazide ≥97.0% analytical reagent, VWR Chemicals |
| Cr-6 Paint low | : Roboton EP Roller Coat SF, 20 mg/kg lead chromate, Baril Coatings, Netherlands |
| Cr-6 Paint high | : Roboton EP Roller Coat SF, 1000 mg/kg lead chromate, Baril Coatings |
| Aluminium paint | : Roboton EP Roller Coat SF, Baril Coatings |
| Zinc Paint | : SteelKote EP ZN HS, 50-75% Zinc content, Baril Coatings |

### Example 1 Titration of the oxidator

The composition of Samples 1-1A - 1-6A and control 1-BA are given in table 1. The ingredients are mixed together, and water was added to a final volume of 10 ml. At first sodium hydroxide was dissolved in 5 ml deionized water. After dissolution, different hydrogen peroxide volumes were added at 1-1A to 1-6A, followed by the addition of a potassium chromate solution and zinc powder. At the end deionized water was added to make a total volume of 10 ml.

**Table 1**

| Sample | H₂O₂ (27 w/v%) | | K₂CrO₄ 1000 µg/ml | NaOH | | Zinc |
|---|---|---|---|---|---|---|
| | µl | mM | ml | g | M | g |
| 1-BA | 0 | 0 | 0.1 | 0.2 | 0.5 | 1.0 |
| 1-1A | 10 | 8 | 0.1 | 0.2 | 0.5 | 1.0 |
| 1-2A | 25 | 20 | 0.1 | 0.2 | 0.5 | 1.0 |
| 1-3A | 50 | 40 | 0.1 | 0.2 | 0.5 | 1.0 |
| 1-4A | 100 | 80 | 0.1 | 0.2 | 0.5 | 1.0 |
| 1-5A | 200 | 160 | 0.1 | 0.2 | 0.5 | 1.0 |
| 1-6A | 1000 | 800 | 0.1 | 0.2 | 0.5 | 1.0 |

The samples were incubated for 1 hour at 90°C, during incubation, the samples were vortexed 8 times at regular intervals for 10 seconds.

The sample was filtered with a (0.5 µm PTFE filter) and to each sample, 0.5 ml of the detection agent was added. The total volume was brought to 25 ml with 0.5N H₂SO₄.The colouring reaction was performed for at least 30 minutes at 20°C.

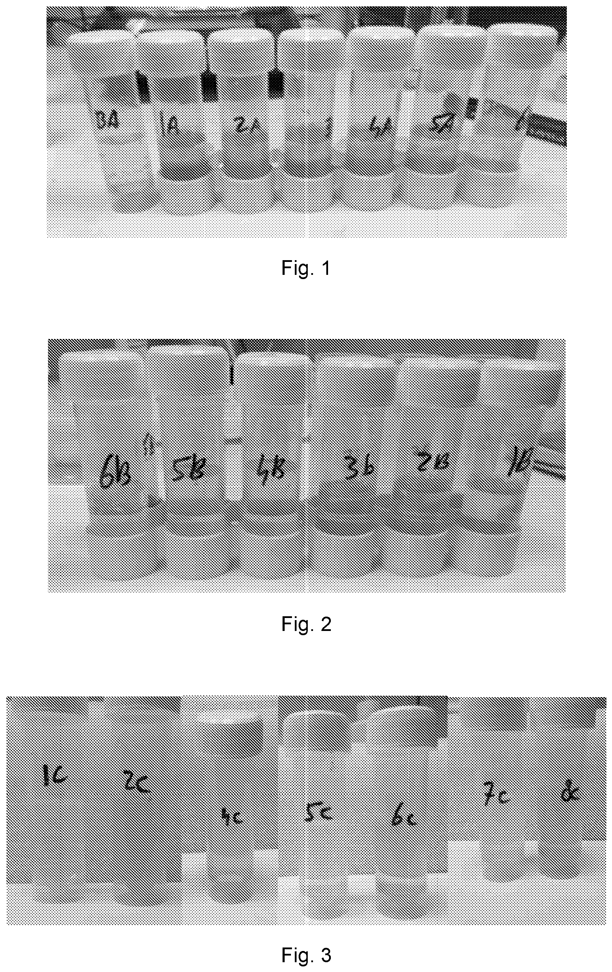

The results of the colouring reaction are shown in figure 1. It is observed that a well visible colour reaction occurs in the presence of the oxidator, whereas in absence, no colouration occurs. This means that in absence of the oxidator, all Cr-6 present has been reduced to Cr-3 due to the oxidation of the zinc present. High oxidator concentrations do not further contribute to the colouring reaction. The preferred range is 7 - 160 mM, preferably 10 - 100 mM.

### Example 2A Titration NaOH

Samples were prepared and treated as described in example 1. The composition of Samples 2-1B - 2-6B are given in table 2A.

The results of the colouring reaction are shown in figure 2. It is observed that a well visible colour reaction occurs at a pH of above 12, in particular 12.7, corresponding with a NaOH concentration of 0.5 M. Below this value, the colouration reaction is less intense. The preferred pH range is therefore 12 - 14.

**Table 2A**

| Sample | H₂O₂ (27 w/v%) | | K₂CrO₄ 1000 µg/ml | NaOH | | Zinc | pH |
|---|---|---|---|---|---|---|---|
| | µl | mM | ml | mg | M | g | |
| 2-1B | 10 | 80 | 0.1 | 20 | 0.05 | 1.0 | 12.7 |
| 2-2B | 25 | 40 | 0.1 | 200 | 0.5 | 1.0 | 13.7 |
| 2-3B | 50 | 40 | 0.1 | 200 | 0.5 | 1.0 | 13.7 |
| 2-4B | 100 | 80 | 0.1 | 400 | 1.0 | 1.0 | 14 |
| 2-5B | 200 | 160 | 0.1 | 600 | 1.5 | 1.0 | 14.2 |
| 2-6B | 1000 | 800 | 0.1 | 800 | 2.0 | 1.0 | 14.3 |

### Example 2B Titration H₂SO₄

The composition of Samples 2-1S - 2-6S are given in table 2B. The envisaged amount of sulfuric acid was added to a 5 ml solution of deionized water, followed by the addition of potassium chromate, followed by the addition of potassium permanganate and finally the zinc powder. The samples were incubated for 1 hour at 90°C. After filtration the reagent solution was added as described for example 1 to make the Cr-6 visible.

**Table 2B**

| Sample | KMnO₄ (99,5%) | | K₂CrO₄ (99,9%) 1000 µg/ml | H₂SO₄ (99,5%) | | Zinc | pH |
|---|---|---|---|---|---|---|---|
| | µg/ml | mM | ml | mg | mM | g | |
| 2-1S | 320 | 2 | 0.1 | 490 | 500 | 1.0 | 0.3 |
| 2-2S | 320 | 2 | 0.1 | 49 | 50 | 1.0 | 1.3 |
| 2-3S | 320 | 2 | 0.1 | 4,9 | 5 | 1.0 | 2.3 |
| 2-4S | 320 | 2 | 0.1 | 0.49 | 0.5 | 1.0 | 3.3 |
| 2-5S | 320 | 2 | 0.1 | 0.245 | 0.25 | 1.0 | 3.6 |
| 2-6S | 320 | 2 | 0.1 | 0.049 | 0.05 | 1.0 | 4.3 |

It was observed that a well visible colour reaction occurs in at a pH of below 2.3, corresponding with a H₂SO₄ concentration of 5 mM. Above this value, the colouration reaction is less intense. The preferred pH range is therefore 1.0 - 2.5, more preferably 1.0 - 2.0.

### Example 3 Reaction times

Samples were prepared and treated as described in example 1, except for the incubation time, which is indicated in table 3, together with the composition of Samples 3-1C - 3-8C

**Table 3**

| Sample | H₂O₂ (27 w/v%) | | K₂CrO₄ 1000 µg/ml | NaOH | | Zinc | Time |
|---|---|---|---|---|---|---|---|
| | µl | mM | ml | g | M | g | min |
| 3-1C | 0 | 0 | 0.1 | 0.2 | 0.5 | 1.0 | 5 |
| 3-2C | 10 | 8 | 0.1 | 0.2 | 0.5 | 1.0 | 5 |
| 3-3C | 0 | 0 | 0.1 | 0.2 | 0.5 | 1.0 | 15 |
| 3-4C | 10 | 8 | 0.1 | 0.2 | 0.5 | 1.0 | 15 |
| 3-5C | 0 | 0 | 0.1 | 0.2 | 0.5 | 1.0 | 30 |
| 3-6C | 10 | 8 | 0.1 | 0.2 | 0.5 | 1.0 | 30 |
| 3-7C | 0 | 0 | 0.1 | 0.2 | 0.5 | 1.0 | 60 |
| 3-8C | 10 | 8 | 0.1 | 0.2 | 0.5 | 1.0 | 60 |

The results of the colouring reaction are shown in figure 3. It is observed that a visible reaction is already observed after 5 minutes incubation at 90°C.

### Example 4 Paint samples

Known Cr-6 paint samples also have been investigated. This was done by investigating the effect of different paint layers (Cr-6 primer, zinc intermediate coating, aluminium topcoat), with and without the addition of an oxidant. Two primers were investigated, which differ in the Cr-6 content, namely plate B2, coated with a primer containing 20 mg/kg lead chromate, and plate B6, coated with a coating containing 1000 mg/kg lead chromate. Apart from the concentration of lead chromate, plates B2 and B6 are identical. The Cr-6 determination has been performed at the following conditions, wherein refence is made to example 1: extraction for 30 minutes in 10 ml NaOH/Na₂CO₃ at 90°C, 8 times vortexed for 10 seconds at regular intervals, and quantification by UV-VIS spectrometry at wavelength 543 nm (model Jenway 6300, Cole-Parmer, UK).

**Table 4**

| Sample | H₂O₂ (27 w/v%) | | Cr-6 | NaOH | | Plate | Paint layers |
|---|---|---|---|---|---|---|---|
| | µl | mM | mg/kg | g | M | type | |
| 4-1D | 0 | 0 | 6 | 0.2 | 0.5 | B2 | Cr-6 |
| 4-2D | 15 | 12 | 6 | 0.2 | 0.5 | B2 | Cr-6 |
| 4-3D | 0 | 0 | 0 | 0.2 | 0.5 | B2 | Cr-6 / Zn |
| 4-4D | 15 | 12 | 2 | 0.2 | 0.5 | B2 | Cr-6 / Zn |
| 4-5D | 0 | 0 | 0 | 0.2 | 0.5 | B2 | Cr-6 / Zn / Al |
| 4-6D | 15 | 12 | 3 | 0.2 | 0.5 | B2 | Cr-6 / Zn / Al |
| 4-7D | 0 | 0 | 107 | 0.2 | 0.5 | B2 | Cr-6 |
| 4-8D | 15 | 12 | 101 | 0.2 | 0.5 | B6 | Cr-6 |
| 4-9D | 0 | 0 | 0 | 0.2 | 0.5 | B6 | Cr-6 / Zn |
| 4-10D | 15 | 12 | 5 | 0.2 | 0.5 | B6 | Cr-6 / Zn |
| 4-11D | 0 | 0 | 0 | 0.2 | 0.5 | B6 | Cr-6 / Zn / Al |
| 4-12D | 15 | 12 | 8 | 0.2 | 0.5 | B6 | Cr-6 / Zn / Al |

### Example 5 Field test

Paint samples were taken from painted bridge parts (Oranjebrug, Schiedam, The Netherlands) that were pained with different paints.

Samples were taken, with an amount of one gram of paint per sample, which was further analysed by XRF analysis. The paint was crushed into smaller particles followed by a XRF analysis. The XRF analysis was done by a Niton XL5 Plus. In order to get a total screening of metals the analysis was performed by light, low and main wave lengths with 30 seconds for each wavelength.

Table 5 shows the content of Cr-6, zinc and aluminium in the samples.

**Table 5**

| Sample | H₂O₂ (27 w/v%) | | NaOH | | Cr-6 | Zn | Al |
|---|---|---|---|---|---|---|---|
| | µl | mM | g | M | mg/kg | mg/kg | mg/kg |
| 5-005- | 0 | 0 | 0.2 | 0.5 | 846 | 41799 | 2591 |
| 5-005+ | 100 | 80 | 0.2 | 0.5 | | | |
| 5-006- | 0 | 0 | 0.2 | 0.5 | 1381 | 21241 | 3065 |
| 5-006+ | 100 | 80 | 0.2 | 0.5 | | | |
| 5-007- | 0 | 0 | 0.2 | 0.5 | 1048 | 25734 | 4227 |
| 5-007+ | 100 | 80 | 0.2 | 0.5 | | | |

Sample 5-005 was taken from the upper bridge surface, sample 5-006 was taken from the bridge barrier, and sample 5-007 from the control panel.

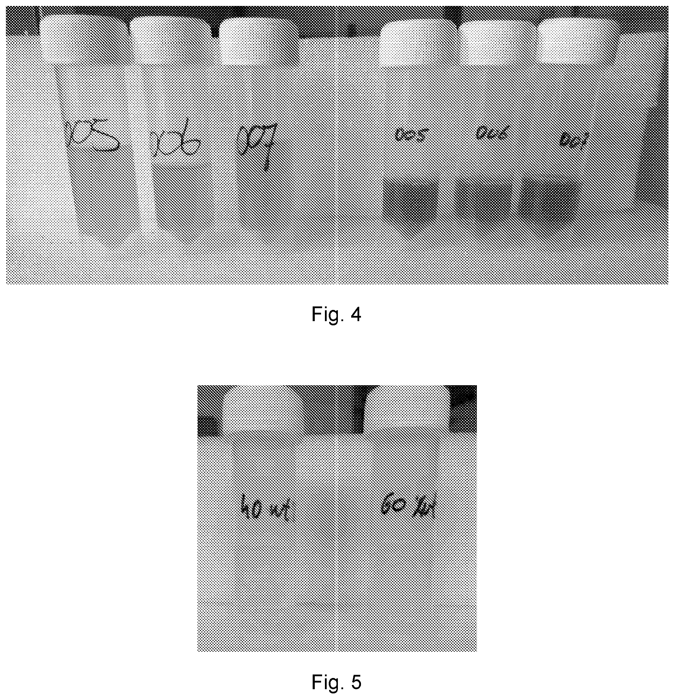

Samples of the paint samples were prepared by weighing 1000 mg of the paint sample in a 10 ml reaction tube, and the ingredients were added as indicated in table 5. The results are shown in figure 4. It is clear that the samples containing the oxidant (samples 005, 006 and 007 on the right, in the table indicated as '+' samples) give a strong colouration reaction, whereas the samples without oxidant (samples 005, 006 and 007 on the left, in the table indicated as '-' samples) do not show any discolouration, meaning that in the samples without oxidant, the Cr-6 present has been reduced to Cr-3, whereas the samples including the oxidant show the presence of Cr-6.

### Example 6 Cr₂O₃ control test

Samples were prepared as described in Example 1 from paint comprising 275,000 ppm Cr₂O₃ (40 wt.% Cr₂O₃) and 410,00 ppm Cr₂O₃ (60 wt.% Cr₂O₃), and the Cr-6 content was measured accordingly. The results are shown in figure 5, showing that no Cr-6 was measured above the threshold level of 10 mg/kg.

### Example 7 single step test vs. multi-step test

### Single step test

Samples were treated as described in Example 1.

Chromium-6 was extracted from paint by the incubation for 60 minutes in 5ml 3% NaCO₃ / 2% NaOH whereto 0.2 ml 35% H₂O₂ was added.

After filtration, the filtrate was added to 3M H₂SO₄ with 0.5ml 2% diphenylcarbazide.

### Multi step test

Chromium-6 was extracted from paint by the incubation for 60 minutes in 5ml 3% NaCO₃ / 2% NaOH to allow the Cr-6 to dissolve. To this Cr solution, 3M H₂SO₄ was added until the pH reached a value of 1.

After filtration, the filtrate was alkalised to pH 14 with 1N NaOH, whereafter 0.2 ml 35% H₂O₂ was added. After 45 minutes of oxidation, the mixture was added to 3M H₂SO₄ with 0.5 ml 2% diphenylcarbazide.

The multi step test showed an improved recovery of Cr-6 and therewith provides a test with increased reliability. The results are shown in table 6.

**Table 6: single step test vs. multi step test**

| | | Cr-6 measured | | | |
|---|---|---|---|---|---|
| Cr-6 (ppm) | Zinc (ppm) | Single step (ppm) | Single step (Recovery %) | Multi step (ppm) | Multi step (recovery) |
| 100 | 100.000 | 59 | 59 | 89 | 89 |
| 500 | 100.000 | 352 | 70 | 454 | 91 |
| 1000 | 100.000 | 761 | 76 | 923 | 92 |

## Claims

1. Method for determination of the presence chromium-6 (Cr-6) in a solid sample wherein false positives as a result of conversion form Cr-3 to Cr-6 is avoided, comprising the steps of
- contacting the solid sample with a destruction liquid under conditions wherein Cr-6 from the solid sample dissolves in the destruction liquid as a chromate and wherein Cr₂O₃ does not dissolve, providing a test solution wherein the solid Cr-6 is dissolved;
- subjecting the test solution obtained in step (1) to a specific Cr-6 detection reaction, under conditions wherein the presence of Cr-6 is detected;
- detecting whether the Cr-6 specific reaction occurred in step (2);
**characterized in that** the destruction liquid comprises an oxidator, having a higher standard electrode potential *E⁰* than the chromate.

2. Method of claim 1, wherein the destruction liquid is chosen from an acid destruction liquid having a pH of 1 - 5, preferably 1 - 4, more preferably 1 - 3 and most preferably 1 - 2, and a basic destruction liquid having a pH of 9 - 14, preferably 10 - 14, more preferably 11 - 14, most preferably 12 - 14.

3. Method of claim 1 or 2, wherein
- the acid destruction liquid comprises H₂SO₄,HNO₃ or HCl;
- the basic destruction liquid comprises a base, chosen from NaOH and KOH or a combination thereof, and Na₂CO₃, the basic destruction liquid preferably comprising 0.05 - 5 M, more preferably 0.1 - 1 M, most preferably 0.4 - 0.6 M of the base.

4. Method of claim 2 or 3, wherein the destruction liquid comprises 0.03 - 3 M, preferably 0.1 - 1 M, more preferably 0.2 - 0.4 M Na₂CO₃.

5. Method of any one of the preceding claims, wherein step (1) comprises the steps of:
(1.1) contacting the solid sample with the basic destruction liquid comprising Na₂CO₃, allowing the Cr-6 from the solid sample to dissolve, obtaining a Cr solution;
(1.2) removing the carbonate from the Cr solution of step (1.1), obtaining a carbonate depleted Cr solution;
(1.3) adding the oxidator to the carbonate depleted Cr solution of step (1.2).

6. Method of claim 5, wherein step (1.2) comprises a step (1.2.1) of acidifying the Cr solution to a pH of 1 - 5, preferably to 1 - 4, more preferably to 1 - 3, allowing the carbonate to be converted to gaseous CO₂.

7. Method of claim 6, wherein step (1.2) comprises a step (1.2.2) of increasing the pH of the acidified Cr solution of step (1.2.1) to a pH of 9 - 14, preferably 10 - 14, more preferably 11 - 14, most preferably 12 - 14.

8. Method of any one of the preceding claims, wherein step (2), or, if present, step (1.3), is preceded by a filtration step in order to remove solids, the filtration step preferably comprising filtration through a filter of 0.1 - 1 micron.

9. Method of any one of the preceding claims, wherein the oxidator in the destruction liquid is chosen such, that the standard electrode potential *E⁰* thereof is above 1.23 mV, and/or chosen from the group, consisting of hydrogen peroxide, manganese dioxide, persulfate, hypochlorite, permanganate, chlorine, lead oxide, cerium-4, ozone and fluorine, the oxidator preferably comprising hydrogen peroxide.

10. Method of any one of the preceding claims, wherein the destruction liquid comprises 1 mM - 10 M, preferably 5 mM - 5M of the oxidator, or in case the destruction liquid comprises carbonate, 1 mM - 1M, preferably 10 - 100 mM of the oxidator.

11. Method of any one of the preceding claims, wherein the specific Cr-6 detection reaction comprises a chromogenic agent capable of specifically reacting with a chromate resulting in a colour change, the chromogenic agent preferably being chosen from 1,5-diphenylcarbazide and variamine blue B.

12. Method of any one of the preceding claims, wherein the destruction liquid for dissolving Cr-6 from a solid sample comprises:
- 0.05 - 5 M, preferably 0.1 - 1 M, more preferably 0.4 - 0.6 M of a base, chosen from NaOH and KOH or a combination thereof,
- 0.03 - 3 M, preferably 0.1 - 1 M, more preferably 0.2 - 0.4 M Na₂CO₃, and
- 10 - 100 mM of an oxidator having a standard electrode potential *E⁰* of more than 1.23 mV, the oxidator preferably comprising hydrogen peroxide.

13. Use of a solution, comprising:
- 0.05 - 5 M, preferably 0.1 - 1 M, more preferably 0.4 - 0.6 M of a base, chosen from NaOH and KOH or a combination thereof,
- 0.03 - 3 M, preferably 0.1 - 1 M, more preferably 0.2 - 0.4 M Na₂CO₃, and
- 10 - 100 mM of an oxidator having a standard electrode potential *E⁰* of more than 1.23 mV, the oxidator preferably comprising hydrogen peroxide,
as a destruction liquid for dissolving Cr-6 from a solid sample.

14. Kit for determining Cr-6 in a solid sample, comprising
- a first container comprising a destruction liquid comprising
- 0.05 - 5 M of a base, chosen from NaOH and KOH or a combination thereof,
- 0.03 - 3 M Na₂CO₃, and
- 10 - 100 mM of an oxidator having a standard electrode potential E₀ of more than 1.23 mV,
and
- a second container comprising a solution comprising a chromogenic agent capable of specifically reacting with a chromate resulting in a colour change.

15. Kit of claim 14, further comprising an additional container comprising a positive control sample comprising a chromate.

## Patentansprüche

1. Verfahren zur Bestimmung des Vorhandenseins von Chrom-6 (Cr-6) in einer festen Probe, wobei falsch-positive Ergebnisse aufgrund der Umwandlung von Cr-3 zu Cr-6 vermieden werden, umfassend die folgenden Schritte
- Inkontaktbringen der festen Probe mit einer Zerstörungsflüssigkeit unter Bedingungen, unter denen sich Cr-6 aus der festen Probe als Chromat in der Zerstörungsflüssigkeit löst und unter denen sich Cr₂O₃ nicht löst, wodurch eine Testlösung bereitgestellt wird, in der das feste Cr-6 gelöst ist;
- Unterziehen der in Schritt (1) erhaltenen Testlösung einer spezifischen Cr-6-Nachweisreaktion unter Bedingungen, unter denen das Vorhandensein von Cr-6 nachgewiesen wird;
- Nachweisen, ob die Cr-6-spezifische Reaktion in Schritt (2) stattgefunden hat; **dadurch gekennzeichnet, dass** die Zerstörungsflüssigkeit ein Oxidationsmittel mit einem höheren Standardelektrodenpotential *E⁰* als das Chromat umfasst.

2. Verfahren nach Anspruch 1, wobei die Zerstörungsflüssigkeit ausgewählt ist aus einer sauren Zerstörungsflüssigkeit mit einem pH-Wert von 1 bis 5, vorzugsweise 1 bis 4, noch bevorzugter 1 bis 3 und am meisten bevorzugt 1 bis 2, und einer basischen Zerstörungsflüssigkeit mit einem pH-Wert von 9 bis 14, vorzugsweise 10 bis 14, noch bevorzugter 11 bis 14, am meisten bevorzugt 12 bis 14.

3. Verfahren nach Anspruch 1 oder 2, wobei
- die saure Zerstörungsflüssigkeit H₂SO₄, HNO₃ oder HCl umfasst;
- die basische Zerstörungsflüssigkeit eine Base umfasst, die aus NaOH und KOH oder einer Kombination davon und Na₂CO₃ ausgewählt ist, wobei die basische Zerstörungsflüssigkeit vorzugsweise 0,05 - 5 M, noch bevorzugter 0,1 - 1 M, am meisten bevorzugt 0,4 - 0,6 M der Base umfasst.

4. Verfahren nach Anspruch 2 oder 3, wobei die Zerstörungsflüssigkeit 0,03 bis 3 M, vorzugsweise 0,1 bis 1 M, noch bevorzugter 0,2 bis 0,4 M Na₂CO₃ umfasst.

5. Verfahren nach einem der vorstehenden Ansprüche, wobei Schritt (1) die folgenden Schritte umfasst:
(1.1) Inkontaktbringen der festen Probe mit der basischen Zerstörungsflüssigkeit, die Na₂CO₃ umfasst, Auflösen des Cr-6 aus der festen Probe, Erhalten einer Cr-Lösung;
(1.2) Entfernen des Carbonats aus der Cr-Lösung aus Schritt (1.1), Erhalten einer carbonatarmen Cr-Lösung;
(1.3) Zugabe des Oxidationsmittels zu der carbonatarmen Cr-Lösung aus Schritt (1.2).

6. Verfahren nach Anspruch 5, wobei Schritt (1.2) einen Schritt (1.2.1) umfasst, bei dem die Cr-Lösung auf einen pH-Wert von 1 bis 5, vorzugsweise von 1 bis 4, noch bevorzugter von 1 bis 3 angesäuert wird, wodurch das Karbonat in gasförmiges CO₂ umgewandelt wird.

7. Verfahren nach Anspruch 6, wobei Schritt (1.2) einen Schritt (1.2.2) umfasst, bei dem der pH-Wert der angesäuerten Cr-Lösung aus Schritt (1.2.1) auf einen pH-Wert von 9 bis 14, vorzugsweise 10 bis 14, noch bevorzugter 11 bis 14, am meisten bevorzugt 12 bis 14 erhöht wird.

8. Verfahren nach einem der vorstehenden Ansprüche, wobei dem Schritt (2) oder, falls vorhanden, dem Schritt (1.3) ein Filtrationsschritt zum Entfernen von Feststoffen vorausgeht, wobei der Filtrationsschritt vorzugsweise eine Filtration durch einen Filter von 0,1 bis 1 Mikrometer umfasst.

9. Verfahren nach einem der vorstehenden Ansprüche, wobei das Oxidationsmittel in der Zerstörungsflüssigkeit so gewählt ist, dass dessen Standardelektrodenpotential *E⁰* über 1,23 mV liegt, und/oder aus der Gruppe ausgewählt ist, die aus Wasserstoffperoxid, Mangandioxid, Persulfat, Hypochlorit, Permanganat, Chlor, Bleioxid, Cer-4, Ozon und Fluor besteht, wobei das Oxidationsmittel vorzugsweise Wasserstoffperoxid umfasst.

10. Verfahren nach einem der vorstehenden Ansprüche, wobei die Zerstörungsflüssigkeit 1 mM - 10 M, vorzugsweise 5 mM - 5 M des Oxidationsmittels umfasst, oder falls die Zerstörungsflüssigkeit Carbonat umfasst, 1 mM - 1 M, vorzugsweise 10 - 100 mM des Oxidationsmittels.

11. Verfahren nach einem der vorstehenden Ansprüche, wobei die spezifische Cr-6-Nachweisreaktion ein chromogenes Mittel umfasst, das spezifisch mit einem Chromat reagieren kann, was zu einer Farbänderung führt, wobei das chromogene Mittel vorzugsweise aus 1,5-Diphenylcarbazid und Variaminblau B ausgewählt ist.

12. Verfahren nach einem der vorstehenden Ansprüche, wobei die Zerstörungsflüssigkeit zum Auflösen von Cr-6 aus einer festen Probe umfasst:
- 0,05 - 5 M, vorzugsweise 0,1 - 1 M, noch bevorzugter 0,4 - 0,6 M einer Base, ausgewählt aus NaOH und KOH oder einer Kombination davon,
- 0,03 - 3 M, vorzugsweise 0,1 - 1 M, noch bevorzugter 0,2 - 0,4 M Na₂CO₃, und
- 10 bis 100 mM eines Oxidationsmittels mit einem Standardelektrodenpotential E0 von mehr als 1,23 mV, wobei das Oxidationsmittel vorzugsweise Wasserstoffperoxid umfasst.

13. Verwendung einer Lösung, umfassend:
- 0,05 - 5 M, vorzugsweise 0,1 - 1 M, noch bevorzugter 0,4 - 0,6 M einer Base, ausgewählt aus NaOH und KOH oder einer Kombination davon,
- 0,03 - 3 M, vorzugsweise 0,1 - 1 M, noch bevorzugter 0,2 - 0,4 M Na₂CO₃ und
- 10 - 100 mM eines Oxidationsmittels mit einem Standardelektrodenpotential *E⁰* von mehr als 1,23 mV, wobei das Oxidationsmittel vorzugsweise Wasserstoffperoxid umfasst,
als Zerstörungsflüssigkeit zum Auflösen von Cr-6 aus einer festen Probe.

14. Kit zur Bestimmung von Cr-6 in einer festen Probe, umfassend
- einen ersten Behälter, der eine Zerstörungsflüssigkeit enthält, die
- 0,05-5 M einer Base, ausgewählt aus NaOH und KOH oder einer Kombination davon,
- 0,03-3 M Na₂CO₃ und
- 10 bis 100 mM eines Oxidationsmittels mit einem Standardelektrodenpotential E0 von mehr als 1,23 mV,
enthält, und
- einen zweiten Behälter, der eine Lösung enthält, die ein chromogenes Mittel enthält, das spezifisch mit einem Chromat reagieren kann, was zu einer Farbänderung führt.

15. Kit nach Anspruch 14, der ferner einen zusätzlichen Behälter umfasst, der eine positive Kontrollprobe enthält, die ein Chromat enthält.

## Revendications

1. Procédé pour déterminer la présence de chrome-6 (Cr-6) dans un échantillon solide, dans lequel les faux positifs résultant de la conversion du Cr-3 en Cr-6 sont évités, comprenant les étapes suivantes
- mettre en contact l'échantillon solide avec un liquide de destruction dans des conditions dans lesquelles le Cr-6 provenant de l'échantillon solide se dissout dans le liquide de destruction sous forme de chromate et dans lesquelles le Cr₂O₃ ne se dissout pas, afin d'obtenir une solution d'essai dans laquelle le Cr-6 solide est dissous ;
- soumettre la solution d'essai obtenue à l'étape (1) à une réaction de détection spécifique du Cr-6, dans des conditions dans lesquelles la présence de Cr-6 est détectée :
- détecter si la réaction spécifique au Cr-6 s'est produite à l'étape (2) ;
**caractérisée en ce que** le liquide de destruction comprend un oxydant ayant un potentiel d'électrode standard *E⁰* supérieur à celui du chromate.

2. Procédé selon la revendication 1, dans lequel le liquide de destruction est choisi parmi un liquide de destruction acide ayant un pH de 1 à 5, de préférence de 1 à 4, plus préférablement de 1 à 3 et de manière encore plus préférable de 1 à 2, et un liquide de destruction basique ayant un pH de 9 à 14, de préférence de 10 à 14, plus préférablement de 11 à 14, de préférence 12 à 14.

3. Procédé selon la revendication 1 ou 2, dans lequel
- le liquide de destruction acide comprend H₂SO₄, HNO₃ ou HCl ;
- le liquide de destruction basique comprend une base, choisie parmi NaOH et KOH ou une combinaison de ceux-ci, et Na₂CO₃, le liquide de destruction basique comprenant de préférence 0,05 à 5 M, de préférence 0,1 à 1 M, de préférence 0,4 à 0,6 M de la base.

4. Procédé selon la revendication 2 ou 3, dans lequel le liquide de destruction comprend 0,03 à 3 M, de préférence 0,1 à 1 M, plus préférablement 0,2 à 0,4 M de Na₂CO₃.

5. Procédé selon l'une quelconque des revendications précédentes, dans lequel l'étape (1) comprend les étapes consistant à :
(1.1) mettre en contact l'échantillon solide avec le liquide de destruction basique comprenant du Na₂CO₃, permettre au Cr-6 provenant de l'échantillon solide de se dissoudre, obtenir une solution de Cr ;
(1.2) éliminer le carbonate de la solution de Cr de l'étape (1.1), obtenir une solution de Cr appauvrie en carbonate ;
(1.3) ajouter l'oxydant à la solution de Cr appauvrie en carbonate de l'étape (1.2).

6. Procédé selon la revendication 5, dans lequel l'étape (1.2) comprend une étape (1.2.1) consistant à acidifier la solution de Cr à un pH de 1 à 5, de préférence de 1 à 4, plus préférablement de 1 à 3, permettant au carbonate d'être converti en CO₂ gazeux.

7. Procédé selon la revendication 6, dans lequel l'étape (1.2) comprend une étape (1.2.2) consistant à augmenter le pH de la solution de Cr acidifiée de l'étape (1.2.1) à un pH de 9 à 14, de préférence de 10 à 14, plus préférablement de 11 à 14, et de manière encore plus préférable de 12 à 14.

8. Procédé selon l'une quelconque des revendications précédentes, dans lequel l'étape (2), ou, si elle est présente, l'étape (1.3), est précédée d'une étape de filtration afin d'éliminer les solides, l'étape de filtration comprenant de préférence une filtration à travers un filtre de 0,1 à 1 micron.

9. Procédé selon l'une quelconque des revendications précédentes, dans lequel l'oxydant dans le liquide de destruction est choisi de telle sorte que son potentiel d'électrode standard *E⁰* soit supérieur à 1,23 mV, et/ou choisi parmi le groupe constitué du peroxyde d'hydrogène, du dioxyde de manganèse, du persulfate, de l'hypochlorite, du permanganate, du chlore, de l'oxyde de plomb, du cérium-4, de l'ozone et du fluor, l'oxydant comprenant de préférence du peroxyde d'hydrogène.

10. Procédé selon l'une quelconque des revendications précédentes, dans lequel le liquide de destruction comprend 1 mM à 10 M, de préférence 5 mM à 5 M d'oxydant, ou dans le cas où le liquide de destruction comprend du carbonate, 1 mM à 1 M, de préférence 10 à 100 mM d'oxydant.

11. Procédé selon l'une quelconque des revendications précédentes, dans lequel la réaction de détection spécifique du Cr-6 comprend un agent chromogène capable de réagir spécifiquement avec un chromate, entraînant un changement de couleur, l'agent chromogène étant de préférence choisi parmi le 1,5-diphénylcarbazide et le bleu de variamine B.

12. Procédé selon l'une quelconque des revendications précédentes, dans lequel le liquide de destruction pour dissoudre le Cr-6 d'un échantillon solide comprend :
- 0,05 à 5 M, de préférence 0,1 à 1 M, plus préférablement 0,4 à 0,6 M d'une base, choisie parmi NaOH et KOH ou une combinaison de ceux-ci,
- 0,03 à 3 M, de préférence 0,1 à 1 M, plus préférablement 0,2 à 0,4 M de Na₂CO₃, et
- 10 à 100 mM d'un oxydant ayant un potentiel d'électrode standard *E⁰* supérieur à 1,23 mV, l'oxydant comprenant de préférence du peroxyde d'hydrogène.

13. Utilisation d'une solution comprenant :
- 0,05 à 5 M, de préférence 0,1 à 1 M, plus préférablement 0,4 à 0,6 M d'une base, choisie parmi NaOH et KOH ou une combinaison de ceux-ci,
- 0,03 à 3 M, de préférence 0,1 à 1 M, plus préférablement 0,2 à 0,4 M de Na₂CO₃, et
- 10 à 100 mM d'un oxydant ayant un potentiel d'électrode standard *E⁰* supérieur à 1,23 mV, l'oxydant comprenant de préférence du peroxyde d'hydrogène,
comme liquide de destruction pour dissoudre le Cr-6 d'un échantillon solide.

14. Kit pour déterminer le Cr-6 dans un échantillon solide, comprenant
- un premier récipient comprenant un liquide de destruction comprenant
- 0,05 à 5 M d'une base, choisie parmi NaOH et KOH ou une combinaison de ceux-ci,
- 0,03 à 3 M de Na₂CO₃, et
- 10 à 100 mM d'un oxydant ayant un potentiel d'électrode standard Eₒ supérieur à 1,23 mV,
et
- un deuxième récipient comprenant une solution comprenant un agent chromogène capable de réagir spécifiquement avec un chromate, entraînant un changement de couleur.

15. Kit selon la revendication 14, comprenant en outre un récipient supplémentaire comprenant un échantillon témoin positif comprenant un chromate.
